# EUROPEAN PATENT SPECIFICATION

(11) **EP 1 849 357 B1**
(45) Date of publication and mention of the grant of the patent: **25.06.2008**
(21) Application number: 06256520.5
(22) Date of filing: 21.12.2006
(51) Int. Cl.: A01K 89/01

(54) **A fixed spool fishing reel**
Angelrolle mit fester Spule
Moulinet de pêche à tambour fixe

(30) Priority: 27.04.2006 GB 0608383
(43) Date of publication of application: 31.10.2007
(73) Proprietor: FOX INTERNATIONAL GROUP LIMITED, Hainault, Essex IG6 3UT (GB)
(72) Inventor: Fox, Clifford Royston, Upminster Essex RM14 1TP (GB); Little, Andrew, Farnham Surrey GU9 7BW (GB); Zhongkai, Chen, Shantou (CN)
(74) Representative: Crouch, David John

(56) References cited:
- EP-A1- 1 438 895
- US-A1- 2004 227 028
- US-B1- 6 626 385

## Description

The present invention relates to a fixed spool fishing reel having a winding shaft wheel, preferably a crown wheel, which is rotatable about the winding shaft axis by operation of a handle on the winding shaft and which engages a rotor drive which rotates about a first axis which is generally transverse of the winding shaft axis and which drives a spool reciprocating worm shaft, which is rotatable about a second axis generally parallel to the said first axis, the winding shaft being provided with winding shaft attachment means on both sides of the winding shaft wheel, so that a winding handle may be attached selectively to either one or the other of the two sides of the reel.

Such a fishing reel is disclosed in US-B-6,626,385 in which the winding shaft has a narrowed central portion to accommodate a spool shaft.

Such a construction provides the benefit of enabling a line to be laid on the spool with one turn placed beside the next turn without any gap or without much of a gap. This has advantages over the 'aero' type of lay, in which there are relatively few turns of the rotor for each forward or rearward linear movement of the spool. Firstly, it gives a smoother and freer release of the line upon casting or playing of a fish. Secondly, it decreases the damage to the line by virtue of there being fewer and less damaging cross-overs between successive turns of the line around the spool. Cross-overs can cause the line to bite into itself. This can cause kinks, especially in nylon monofilament line. Such damage can significantly reduce the length of useful life of the line.

A disadvantage of such a construction as proposed hitherto is that the arrangement of the rotor drive, worm shaft and reduction gear is such as to prevent attachment of a winding handle of the reel selectively on one side of the reel main body or on the other side thereof.

The present invention seeks to provide a remedy.

Accordingly, the present invention is directed to a fixed spool fishing reel having the construction set out in the opening paragraph of the present specification, in which the rotor drive drives the spool reciprocating worm shaft via reduction gearing which rotates about a third axis generally parallel to the said first and second axes, the said first, second and third axes all being on the same side of the plane of the winding shaft wheel.

The reduction gearing may comprise two cog wheels which are fixed relative to one another but which are rotatable about the said third axis, the two cog wheels being of different respective diameters, the cog wheel of greater diameter engaging the rotor drive and the cog wheel of smaller diameter engaging a gear wheel fixed to the spool reciprocating worm shaft.

The cog wheel of greater diameter may have in the range from about 10 teeth to about 16 teeth, preferably thirteen, and the cog wheel of smaller diameter may have in the range from about five teeth to about ten teeth, preferably seven.

The gearing and worm shaft construction may be such as to cause the rotor drive to rotate in the range from about 15 times to 50 times, for example 22 times, for every linear movement, forwards or backwards, of the spool, depending upon the length of the spool and the cross-sectional diameter of the line.

The gearing may comprise bevelled gearing, and it may be helical or part helical.

Preferably, the winding shaft is arranged in a position above the rotor drive axis with the fishing reel in its intended orientation, and both the reduction gearing axis and the worm shaft axis are arranged below the winding shaft.

An example of a fishing reel made in accordance with the present invention will now be described with reference to the accompanying drawings, in which:
- Figure 1: shows a side view of a fishing reel embodying the present invention;
- Figure 2: shows a cross-section of the reel taken in the plane indicated by the line II-II shown in Figure 1;
- Figure 3: shows a view of parts of the reel shown in Figures 1 and 2, along a central axis thereof, with some parts removed for the sake of clarity;
- Figure 4: shows a perspective view of the parts shown in Figure 3, with further parts added; and
- Figure 5: shows a side view of the parts shown in Figure 4 with yet further parts added.

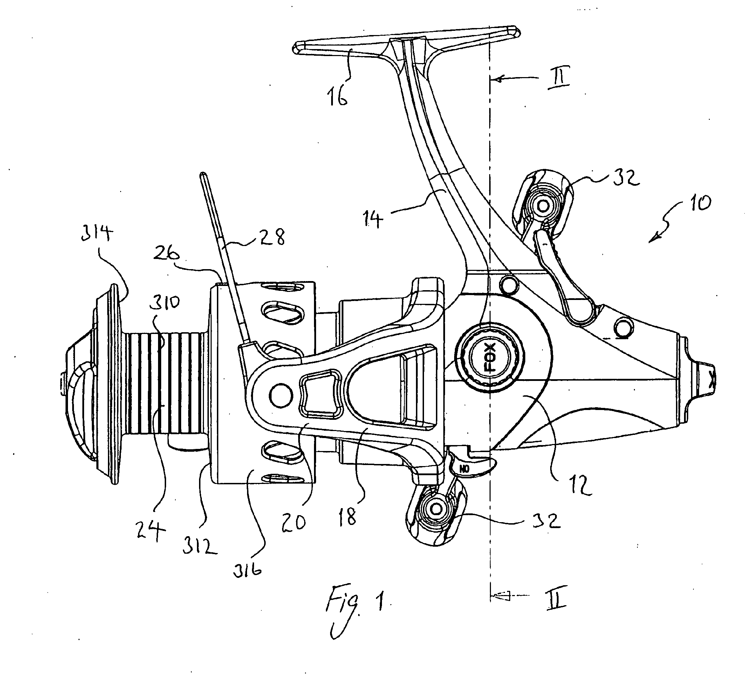

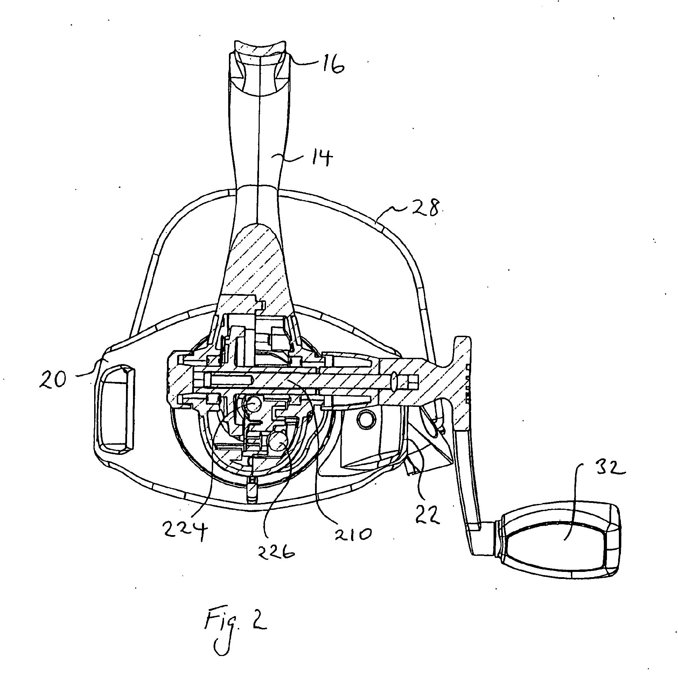

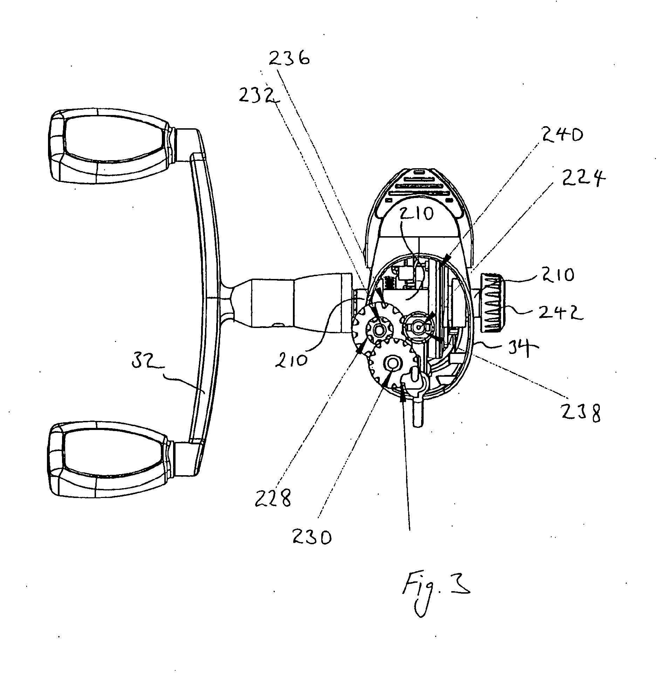

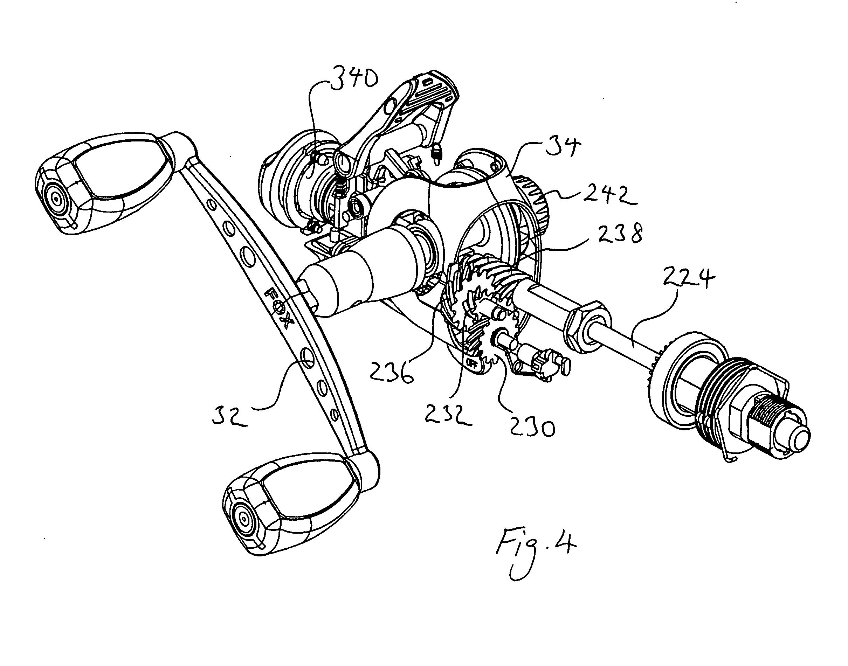

The fishing reel 10 shown in Figures 1 to 5 comprises a main body 12, a suspension leg 14 extending upwardly from the main body, a mounting foot 16 extending transversely of the leg 14 at an upper end thereof in an intended forward/rearward direction, a generally U-shaped rotor 18 mounted on an intended front end of the body 12 with its limbs 20 and 22 directed forwardly, a spool 24 mounted on the body 12 between the arms of the rotor 18, a line clip 26 secured to the spool 24, a bail 28 having respective ends pivoted to the forward ends of the limbs 20 and 22 respectively, and a line guide 30 arranged between one end of the bail 28 and its associated limb 22. A double-ended winding handle 32 is attached to a winding shaft 210 which extends within a housing 34 of the body 12 to one side of the main body 12 of the fishing reel 10. It may be selectively attached to that side or to the other side of the main body 12.

The various parts of the fishing reel 10 may be made of an appropriately hard synthetic plastics material, or of metal, stamp or die cast.

The bail 28 and with it the line guide 30 are pivotable about the ends of the limbs 20 and 22 between a line-guiding position as illustrated in Figure 1, in which the line is guided onto the spool 24, and a line-release position, in which the bail 28 is rotated 180° about the ends of the limbs 20 and 22, relative to the position shown in Figure 1, to take the bail 28 and the guide 30 out of the way of the line. In the line-guiding position, the plane of the line guide 30 is generally parallel with the axis of the spool 24, and the bail 28 extends around the spool 24.

A spool shaft 224 extends along this latter axis and is inhibited from rotation about that axis by bearings (not shown).

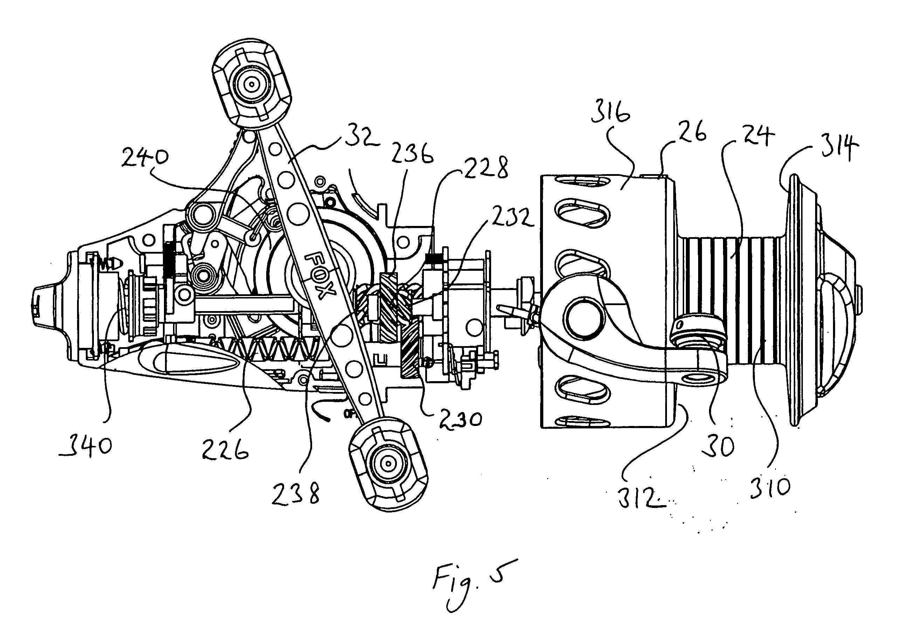

The spool 24 is mounted on the forward end of the spool shaft 224. The latter is shown in its extended forward position in Figure 5. A rearward end of the spool shaft 224 is coupled to a worm shaft 226 having an axis which is generally parallel to the spool shaft 224, in such a fashion that rotation of the worm shaft 226 causes reciprocating linear movement of the spool 24 along the spool shaft axis. The worm shaft 226 is coupled to be driven by reduction gearing 228 via a gear or cog wheel 230 fixed to one end of the worm shaft 226. The cog wheel 230 engages a further cog wheel 232 having seven teeth in this example embodiment, which further cog wheel is one of two coaxial cog wheels forming reduction gearing 228, the other cog wheel 236 of which is of larger diameter than cog wheel 232 and has thirteen teeth in this example embodiment. The reduction gearing axis is held within the main body 12 generally parallel to the spool shaft axis and to the worm shaft 226.

Surrounding and coaxial with the spool shaft 224 is an elongate helically splined rotor drive 238 coupled to rotate with rotor 18. A crown wheel 240 fixed to the winding shaft 210 to rotate about the axis thereof has its teeth intermeshing with the splines of the rotor drive 238, which in turn intermesh with the teeth of the cog wheel 236, being the larger of the two cog wheels which constitute the reduction gearing 234.

As a result, rotation of the handle 32 causes rotation of the crown wheel 240, to rotate the rotor drive 238 and with it the rotor 18, to rotate the reduction gearing 228, to rotate the cog wheel 230 and with it the worm shaft 226, to reciprocate the spool shaft 224 and with it the spool 24. The gearing and worm drive construction is such as to provide twenty-two rotations of the rotor 18 for every forward linear movement of the spool 24, and for every rearward linear movement of the spool 24.

Portions of the winding shaft 210 extend from both sides of the crown wheel 240 and the main body 12 to enable the handle 32 to be selectively mounted on the shaft 34 on either one or the other side of the main body 12, so that the reel is ambidextrous. The unused portion 210 may be covered by a cap 242.

The spool 24 comprises a cylindrical portion 310 on to which fishing line (not shown) is wound when the fishing reel 10 is in use, respective circular flange portions 312 and 314 which are at respective opposite ends of the cylindrical portion 310, which are integral therewith, and which extend outwardly therefrom, and a cylindrical skirt portion 316 extending in an intended rearward direction from and integral with the intended rearward flange 312. The diameter of the spool is substantially 60mm and the depth of each of its flanges is about 28mm.

With the bail 28 in its line-release position, and a line (not shown) wound around the spool 24, and held temporarily, where the line leaves the spool, by a user's finger against the rod to stop the line unravelling from the spool 24, a weight and hook assembly (not shown) at one end of the line can be cast so that the line on the spool unwinds whilst the spool 24 remains stationary relative to the main body 12 of the fishing reel 10. The bail 28 may now be rotated by the user to its line-guiding position and any slack on the line may be taken up by rotation of the handle 32. Initially such rotation causes the fishing line to be directed by the bail 28 onto the guide 30, and thereafter wound around the cylindrical portion 310 of the spool 24 by virtue of the rotation of the rotor 18 and with it the bail 28 and the guide 30. Thus, line extending from the weight and hook arrangement is guided by the bail 28 on to the guide 30 where the line turns through a right angle and then extends on to the cylindrical portion 310 of the spool 24. As the line is wound on to the cylindrical portion 310, the reciprocation of the spool ensures that successive turns of the line around the cylindrical portion 310 are laid neatly adjacent to the immediately preceding turn without excessive spacing and at the same time without any crossing of successive turns.

In the event of a subsequent strike when a fish bites on the hook (not shown), and the angler is ready to play the fish, a clutch mechanism 340 shown in Figure 5 comes into effect. At this stage the line may only be paid out by rotation of the spool 24 to feed out the fishing line via the guide 30, with the clutch construction 340 shown in Figure 5 acting as a drag. In the event that the fish swims towards the fishing reel, slack may be taken up by rotation of the handle 32 so that the line is retrieved and laid down on the cylindrical portion 310 of the spool 24 as already described herein. The clutch arrangement 340 as shown in Figure 5 ensures a uniform action of the clutch which can be adjusted with precision and which at the same time does not result in wobble of the reel 24 on the shaft 224 which could adversely affect the laying of the line on the spool.

The illustrated embodiment is given by way of example only. Many variations may occur to the reader without taking the resulting construction outside the scope of the present invention as claimed in the claims. For example, the winding shaft 210 may be arranged offset from the rotor drive 238 therebelow rather than thereabove, and the axes of the reduction gear 228 and the worm shaft 226 may be positioned above the winding shaft 210 rather than below it.

## Claims

1. A fixed spool fishing reel (10) having a winding shaft wheel (240) which is rotatable about the winding shaft axis by operation of a handle (32) on the winding shaft (210) and which engages a rotor drive (238) which rotates about a first axis which is generally transverse of the winding shaft axis and which drives a spool reciprocating worm shaft (226), which is rotatable about a second axis generally parallel to the said first axis, the winding shaft (210) being provided with winding shaft attachment means on both sides of the winding shaft wheel, so that a winding handle (32) may be attached selectively to either one or the other of the two sides of the reel (10), **characterised in that** the rotor drive (238) drives the spool reciprocating worm shaft (226) via reduction gearing (228) which rotates about a third axis generally parallel to the said first and second axes, the said first, second and third axes all being on the same side of the plane of the winding shaft wheel (240).

2. A fixed spool fishing reel according to claim 1, **characterised in that** the reduction gearing (228) comprises two cog wheels (232, 236) which are fixed relative to one another but which are rotatable about the said third axis, the two cog wheels (232, 236) being of different respective diameters, the cog wheel (236) of greater diameter engaging the rotor drive (238) and the cog wheel (232) of smaller diameter engaging a gear wheel (230) fixed to the spool reciprocating worm shaft (226).

3. A fixed spool fishing reel according to claim 2, **characterised in that** the cog wheel (236) of greater diameter has in the range from ten teeth to sixteen teeth, and the cog wheel (232) of smaller diameter has in the range from five teeth to ten teeth.

4. A fixed spool fishing reel according to claim 3, **characterised in that** the cog wheel (236) of greater diameter has thirteen teeth.

5. A fixed spool fishing reel according to claim 3 or claim 4, **characterised in that** the cog wheel (232) of smaller diameter has seven teeth.

6. A fixed spool fishing reel according to any preceding claim, **characterised in that** the gearing (228) and worm shaft (226) construction is such as to cause the rotor drive (238) to rotate in the range from 15 times to 50 times for every linear movement, forwards or backwards, of the spool (24), depending upon the length of the spool (24) and the cross-sectional diameter of the line.

7. A fixed spool fishing reel according to claim 6, **characterised in that** the gearing (228) and worm shaft (226) construction is such as to cause the rotor drive (238) to rotate 22 times for every linear movement, forwards or backwards, of the spool (24), depending upon the length of the spool (24) and the cross-sectional diameter of the line.

8. A fixed spool fishing reel according to any preceding claim, **characterised in that** the gearing (228) comprises bevelled gearing.

9. A fixed spool fishing reel according to any preceding claim, **characterised in that** the gearing (228) is helical or part helical.

10. A fixed spool fishing reel according to any preceding claim, **characterised in that** the winding shaft (210) is arranged in a position above the rotor drive (238) axis with the fishing reel (10) in its intended orientation, and both the reduction gearing (228) axis and the worm shaft (226) axis are arranged below the winding shaft (210).

## Patentansprüche

1. Angelrolle (10) mit fester Spule, die ein Wickelwellenrad (240) besitzt, das um eine Wickelwellenachse durch Betätigen eines Griffs (32) an der Wickelwelle (210) drehbar ist und mit einem Rotorantrieb (238) in Eingriff ist, der sich um eine erste Achse dreht, die zu der Wickelwellenachse im Allgemeinen quer orientiert ist, und der eine die Spule hin und her bewegende Schneckenwelle (226) antreibt, die um eine zweite Achse drehbar ist, die zu der ersten Achse im Allgemeinen parallel ist, wobei die Wickelwelle (210) mit Wickelwellen-Befestigungsmitteln beiderseits des Wickelwellenrades versehen ist, so dass ein Wickelgriff (32) wahlweise auf der einen oder der anderen der beiden Seiten der Rolle (10) befestigt werden kann, **dadurch gekennzeichnet, dass** der Rotorantrieb (238) die die Spule hin und her bewegende Schneckenwelle (226) über ein Untersetzungsgetriebe (228) antreibt, das sich um eine dritte Achse dreht, die zu der ersten und zu der zweiten Achse im Allgemeinen parallel ist, wobei die erste, die zweite und die dritte Achse alle auf derselben Seite der Ebene des Wickelwellenrades (240) liegen.

2. Angelrolle mit fester Spule nach Anspruch 1, **dadurch gekennzeichnet, dass** das Untersetzungsgetriebe (228) zwei Kammräder (232, 236) umfasst, die relativ zueinander befestigt, jedoch um die dritte Achse drehbar sind, wobei die zwei Kammräder (232, 236) unterschiedliche Durchmesser haben, wobei das Kammrad (236) mit größerem Durchmesser mit dem Rotorantrieb (238) in Eingriff ist und das Kammrad (232) mit kleinerem Durchmesser mit einem Zahnrad (230) in Eingriff ist, das an der die Spule hin und her bewegenden Schneckenwelle (226) befestigt ist.

3. Angelrolle mit fester Spule nach Anspruch 2, **dadurch gekennzeichnet, dass** das Kammrad (236) mit größerem Durchmesser Zähne in einer Anzahl im Bereich von zehn bis sechzehn besitzt und das Kammrad (232) mit kleinerem Durchmesser Zähne in einer Anzahl im Bereich von fünf bis zehn besitzt.

4. Angelrolle mit fester Spule nach Anspruch 3, **dadurch gekennzeichnet, dass** das Kammrad (236) mit größerem Durchmesser dreizehn Zähne besitzt.

5. Angelrolle mit fester Spule nach Anspruch 3 oder Anspruch 4, **dadurch gekennzeichnet, dass** das Kammrad (232) mit kleinerem Durchmesser sieben Zähne besitzt.

6. Angelrolle mit fester Spule nach einem vorhergehenden Anspruch, **dadurch gekennzeichnet, dass** der Aufbau des Getriebes (228) und der Schneckenwelle (226) derart ist, dass der Rotorantrieb (238) dazu veranlasst wird, sich bei jeder geradlinigen Vorwärts- oder Rückwärtsbewegung der Spule (24) in Abhängigkeit von der Länge der Spule (24) und von dem Querschnittsdurchmesser der Leine in einer Anzahl im Bereich von 15 mal bis 50 mal zu drehen.

7. Angelrolle mit fester Spule nach Anspruch 6, **dadurch gekennzeichnet, dass** der Aufbau des Getriebes (228) und der Schneckenwelle (226) derart ist, dass der Rotorantrieb (238) dazu veranlasst wird, sich bei jeder geradlinigen Vorwärts- oder Rückwärtsbewegung der Spule (24) in Abhängigkeit von der Länge der Spule (24) und von dem Querschnittsdurchmesser der Leine 22 mal zu drehen.

8. Angelrolle mit fester Spule nach einem vorhergehenden Anspruch, **dadurch gekennzeichnet, dass** das Getriebe (228) Kegelräder umfasst.

9. Angelrolle mit fester Spule nach einem vorhergehenden Anspruch, **dadurch gekennzeichnet, dass** das Getriebe (228) schraubenlinienförmig oder teilweise schraubenlinienförmig ist.

10. Angelrolle mit fester Spule nach einem vorhergehenden Anspruch, **dadurch gekennzeichnet, dass** die Wickelwelle (210) an einer Position oberhalb der Achse des Rotorantriebs (238) angeordnet ist, wenn sich die Angelrolle (10) in ihrer Sollorientierung befindet, und sowohl die Achse des Untersetzungsgetriebes (228) als auch die Achse der Schneckenwelle (226) unter der Wickelwelle (210) angeordnet sind.

## Revendications

1. Un moulinet de pêche (10) à tambour fixe, ayant une roue d'arbre d'enroulement (240) susceptible de tourner autour de l'axe d'arbre d'enroulement, par l'actionnement d'une manette (32) sur l'arbre d'enroulement (210) et venant en prise avec un entraînement de rotor (238), tournant autour d'un premier axe globalement transversal à l'axe d'arbre d'enroulement, et entraînant un arbre de vis sans fin (226) actionnant en va-et-vient un tambour, susceptible de tourner autour d'un deuxième axe globalement parallèlement audit premier axe, l'arbre d'enroulement (210) étant muni de moyens de fixation d'arbre d'enroulement sur les deux côtés de la roue d'arbre d'enroulement, de manière qu'une manette d'enroulement (32) puisse être fixée sélectivement à l'un ou l'autre des deux côtés du moulinet (10), **caractérisé en ce que** l'entraînement de rotor (238) entraîne l'arbre de vis sans fin (226) actionnant en va-et-vient le tambour, via un engrenage réducteur (228) qui tourne autour d'un troisième axe globalement parallèle auxdits premier et deuxième axes, lesdites premier, deuxième, et troisième axes étant tous situés sur le même côté du plan de la roue d'arbre d'enroulement (240).

2. Un moulinet de pêche à tambour fixe selon la revendication 1, **caractérisé en ce que** l'engrenage réducteur (228) comprend deux roues dentées (232, 236), fixées l'une par rapport à l'autre mais susceptibles de tourner autour dudit troisième axe, les deux roues dentées (232, 236) étant de diamètres respectifs différents, la roue dentée (236) de plus grand diamètre venant en prise avec l'entraînement de rotor (238), et la roue dentée (232) de plus petit diamètre venant en prise avec une roue d'engrenage (230) fixée à l'arbre de vis sans fin (226) d'actionnement en va-et-vient du tambour.

3. Un moulinet de pêche à tambour fixe selon la revendication 2, **caractérisé en ce que** la roue dentée (236) de plus grand diamètre a un nombre de dents dans la fourchette de dix à seize, et la roue dentée (232) de plus petit diamètre a un nombre de dents dans la fourchette de cinq à dix.

4. Un moulinet de pêche à tambour fixe selon la revendication 3, **caractérisé en ce que** la roue dentée (236) de plus grand diamètre comprend treize dents.

5. Un moulinet de pêche à tambour fixe selon la revendication 3 ou 4, **caractérisé en ce que** la roue dentée (232) de plus petit diamètre comprend sept dents.

6. Un moulinet de pêche à tambour fixe selon l'une quelconque des revendications précédentes, **caractérisé en ce que** la construction de l'engrenage (228) et de l'arbre de vis sans fin (226) est telle que l'entraînement de rotor (238) est entraîné en rotation dans une fourchette de 15 fois à 50 fois pour chaque mouvement linéaire, en avant et en arrière, du tambour (24), selon la longueur du tambour (24) et le diamètre de section transversale de la ligne.

7. Un moulinet de pêche à tambour fixe selon la revendication 6, **caractérisé en ce que** la construction de l'engrenage (228) et de l'arbre de vis sans fin (226) est telle que l'entraînement de rotor (238) tourne 22 fois pour chaque mouvement linéaire, en avant en arrière, du tambour (24), selon la longueur du tambour (24) et le diamètre de section transversale de la ligne.

8. Un moulinet de pêche à tambour fixe selon l'une quelconque des revendications précédentes, **caractérisé en ce que** l'engrenage (228) comprend des roues dentées coniques.

9. Un moulinet de pêche à tambour fixe selon l'une quelconque des revendications précédentes, **caractérisé en ce que** l'engrenage (228) est hélicoïdal ou partiellement hélicoïdal.

10. Un moulinet de pêche à tambour fixe selon l'une quelconque des revendications précédentes, **caractérisé en ce que** l'arbre d'enroulement (210) est agencé en une position située au-dessus de l'axe d'entraînement de rotor (238), le moulinet de pêche (10) étant à son orientation prévue, et à la fois l'axe d'engrenage réducteur (228) et l'axe de l'arbre de vis sans fin (226) sont agencés au-dessous de l'arbre d'enroulement (210).
